# EUROPEAN PATENT APPLICATION

(11) **EP 3 634 002 A1**
(43) Date of publication of application: **08.04.2020**
(21) Application number: 18306295.9
(22) Date of filing: 02.10.2018
(51) Int. Cl.: H04N 21/435, H04N 21/45, H04N 21/485, H04N 21/488

(54) **CLOSED CAPTIONING WITH IDENTIFIER CAPABILITIES**

(71) Applicant: InterDigital CE Patent Holdings, 75017 Paris (FR)
(72) Inventor: GUDLAMANI, Mallikarjun, 600097 Chennai (IN); VAITHILINGAM, Premkumar, 603103 Chennai (IN)
(74) Representative: Amor, Rim

(57) **Abstract**

An apparatus and method are provided for providing textual identification in a content. In one embodiment, the content is received and textual information is obtained relating to the content. The textual information is categorized based on a plurality of factors and at least one characteristic is associated with each factor. In step 430, the text and the content is modified based on the associated characteristics.

## Description

### TECHNICAL FIELD

The present embodiments relate generally to providing text relating to a content and in particular to providing closed captioning with content identifier capabilities.

### BACKGROUND

This section is intended to introduce the reader to various aspects of art, which may be related to various aspects of the embodiments described and/or claimed below. This discussion is believed to be helpful in providing the reader with background information to facilitate a better understanding of the various aspects. Accordingly, it should be understood that these statements are to be read in this light, and not as admissions of prior art.

Closed captioning and subtitling are both processes of providing text on a screen. The screen can be that of a movie theater or a television set, or alternatively a computer or a mobile device. The text can appear in conjunction with a content that can include video streams or a live broadcast. While in the past most such uses are provided as transcription (sometimes verbatim) or translation of a dialogue that is interpretive of the audio portion, the usage is expanding. Additional information of non-speech portion of the audio (or even additional information not present in the audio) that enhances the entertainment value or provides further information relating to the content can be included. However, as the amount of such textual additions grew, the identity of the provider or nature of the source becomes confusing. Prior art struggles to provide solutions. Sometimes the name of the speaker is provided and at other times two different colors are used to distinguish between two speakers. However, these are ineffective when many speakers are used or other information is also being simultaneously provided. Consequently, a need exists for improved techniques that can enhance the textual information being provided with a content as relating to its source and nature.

### SUMMARY

An apparatus and method are provided for providing textual identification in a content. In one embodiment, the content is received and textual information is obtained relating to the content. The textual information is categorized based on a plurality of factors and at least one characteristic is associated with each factor. In step 430, the text and the content is modified based on the associated characteristics.

Additional features and advantages are realized through similar techniques and other embodiments and aspects are described in detail herein and are considered a part of the claims. For a better understanding of advantages and features, refer to the description and to the drawings.

### BRIEF DESCRIPTION OF THE DRAWINGS

The present disclosure will be better understood and illustrated by means of the following embodiment and execution examples, in no way limitative, with reference to the appended figures on which:
Figure 1 schematically represents a block diagram of a system with both with audio control and close caption capabilities according to one embodiment;
Figure 2 is a block diagram of a textual information processing center as per one embodiment;
Figure 3 is an illustration of a flowchart for a category selection process as per one embodiment; and
Figure 4 is a flow chart representation of a methodology according to one embodiment.

Wherever possible, the same reference numerals will be used throughout the figures to refer to the same or like parts.

### DESCRIPTION

It is to be understood that the figures and descriptions have been simplified to illustrate elements that are relevant for a clear understanding, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

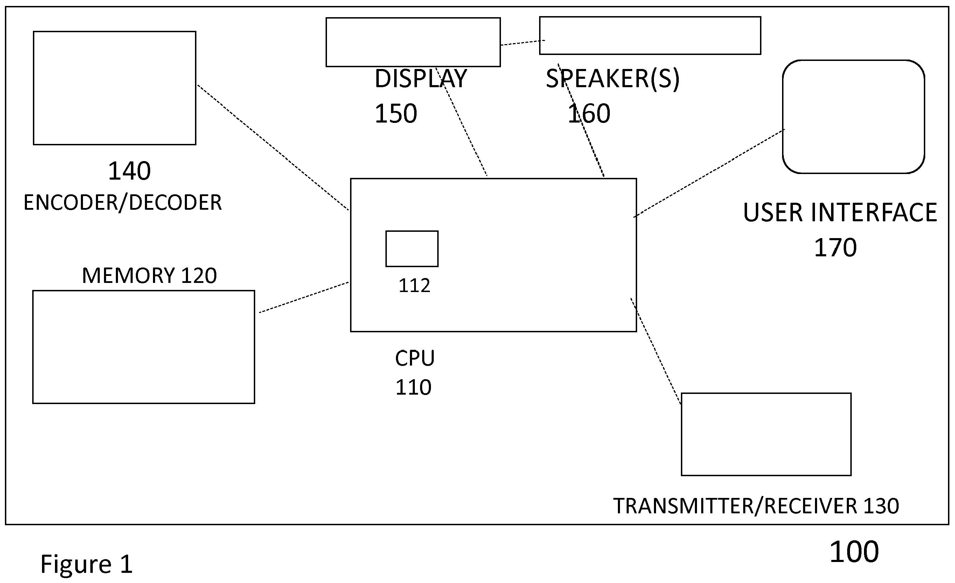

Figure 1 is a block diagram illustrating a system 100 that can receive and display content. This system can be a sophisticated home theater or a mobile tablet or smart phone. In the exemplary embodiment shown, the system 100 detailed configuration of the digital television receiving device 100 and the home theater device 200 in the home theater system 1 illustrated in FIG. 1. The system can include a decoder/encoder 140, a display 150 with integrated or alternatively external speakers 160, an transmitter/receiver 130 such as an HDMI type, a CPU 110 having at least a processor 112, a memory 120, and a user interface such as a remote control 170 or other devices. The sound through the speakers 160 may not be needed in view of close captioning capabilities but it can also be used in conjunction in certain embodiments when sound can be appreciated and enhance close captioning or other textual output. The system can alternatively also include a remote control additional light receiver, a tuner, or other devices as can be understood by those skilled in the art. The tuner in turn can receives, tunes, and demodulates a digital broadcast signal in terrestrial digital broadcasting, digital satellite broadcasting, or the like, and outputs a video signal and an audio signal having a selected content. There can also be a demodulator that can decodes a video signal and an audio signal output from the tuner 101, and outputs video data and audio data. The display can display video or broadcast content on a screen and there can be an audio output-or associated with internal or external speakers.

The user interface such as the remote control device 170 can include a sound volume operation button for a sound volume operation. In traditional systems, a remote control often includes a sound volume operation includes sound volume adjustment, mute setting, and mute release. The sound volume operation button includes a sound volume up button for increasing a sound volume, a sound volume down button for decreasing a sound volume, and a mute button for issuing instructions to perform mute setting and mute release. In this embodiment, no matter what the user interface may be, a user can at least perform sound volume operations of the speakers.

The CPU 110 controls the sound volume of the audio output from the speakers and in general controls other operational components. The memory stores status data including data relating to sound volume control associated with current and previous displayed or broadcast content. The sound volume control status data can include maximum sound volume value data, sound volume setting value data, and mute setting status data associated with programs or genres of programs and user habits associated with them.

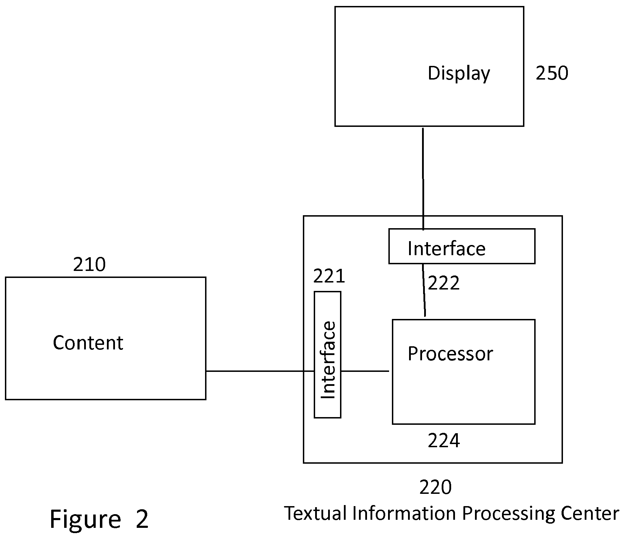

Figure 2 is a block diagram illustration of a textual information processing center 220 that is coupled to a content supplier 210 through an interface 221 and a display 250 through another interface 222. The processing cente4r 220 can also comprise one or more processors, referenced here by numerals 224.

Subtitles and closed captioning has been used in the past to provide aid to those who are deaf or in context of providing a language translation of a displayed audio that is in a different language. The most popular form of captioning has been traditionally found on the television and that of subtitles in movies and other streamed videos including television. These uses have been limited. Closed captioning and subtitles have been traditionally provided by white text appearing on a dark background. More recently, some use of color has been introduced to provide speaker identification and non-speech information but any color used is often only in a second color to differentiate it with the main text. This still leaves an issue when it comes to differentiating information provided by different sources or multiple people. For simplicity, closed captioning or captioning will be used in this document to mean all texts provided in relation to a content including but not limited to subtitles.

In recent years, the scope of providing text in relation to a particular content (video streams or live broadcasts) has been expanded and greatly enhanced. This is partly due to the introduction of the Internet and the newly developed technologies such as video games, especially in the Virtual reality (VR) and Augmented Reality (AR) areas. Additional text in such contexts are not only to transcribe (verbatim) or translate the audio portion of a content but rather to provide additional information about the content.

In one example, during a particular video game, a variety of experiences can be provided by choosing different doors emanating from a lobby. The information about the type of experience can then be provided in form of textual content when the user nears the door or hovers in an area around the door. In another example, such as one that includes an AR environment, such as during performance of a medical procedure, additional information may appear to guide the person performing the procedure more tools during the process. This may include a range of information from patient specific information to more generalized information regarding diagnosis of a condition or its treatment.

In yet another example, comments about a certain movie that has nothing to do with the actual audio may appear alongside the content. The comments may be of a humorous nature mocking the plot or the actors or can provide serious information or trivia about the movie or the subject matter involved.

Looking at these examples, it becomes evident that the nature of information provided can be very different. In fact, in some contexts several type pf information or text may have to appear concurrently. Using the previous example, there may be a scenario where both a humorous and a serious text needs to be provided simultaneously. Differentiating between the accurate information or the sarcastic one may be very important.

Referring back to Figure 2, the Textual Information Processing Center 220 receives content (either live or prerecorded) from a content provider. In one embodiment, textual information is provided from the content provider or along the content itself. In another embodiment, the processor will obtain the text. This will include the processor either having to translate or transcribe the audio portion or alternatively obtaining information from additional available sources. In either case, once the textual portion is obtained, the processor then also determines the source or type of information. For example, when text relates to a person speaking, the gender and other identification information about the person is determined. If the source of audio source is an object or an animal, that information is determined. Additional informational or auxiliary texts are also categorized based on their contexts. The determination of source and nature of these texts are thus categorized based on the factors determines. Factors can include but are not limited to informational, humorous, gender, species, objects or others. Each factor can be then assigned one or more parameters that will be used to differentiate it from others. Such parameters can include (but are not limited to) color, use of graphics (icons, emojis, cartoons etc), pictures and images, highlighting, name, font sizing or even placement of the text in a particular are of the content.

Once textual information is categorized and modified based on such factors, it is then displayed based on the characteristics associated with the factor (color, graphics etc.) to a user or an audience through a display. The display can be that of a movie screen, a computer, a television set of a mobile device such as a laptop or a smart phone.

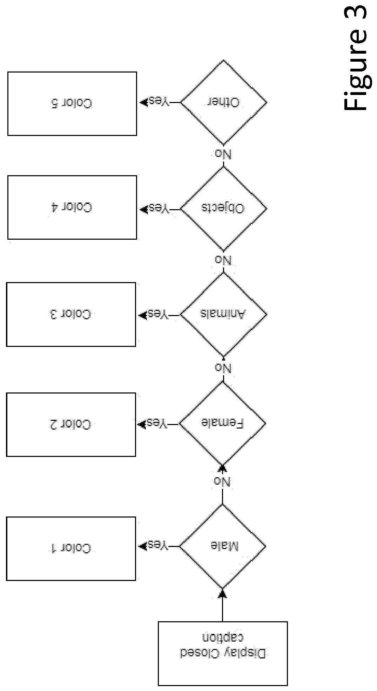

The use of these factors as identifiers may also provide the nature of information being parlayed. For example, a circled "i" image next to the text may indicate additional information during a medical procedure whereas a "p" may indicate patient specific information. The placement of captioning or displaying the name of the speaker or other graphics in conjunction with use of colors together provides, in one embodiment, the ability to customize these identifiers and allow for changes in the content and different needs of the users. Figure 3 provides a simple example that can enhance understanding.

Figure 3 provides an illustration of a simple flowchart depicting the color selection of a textual content based on a variety of factors. As discussed, color is not the only differentiating factor that can be used. Color can be used with a variety of other tools to enhance the selection process. To aid understanding, however, Figure 3 is provided while alternate embodiments can be provided.

In Figure 3, the Textual Information Processing Center 220, after receiving or determining the text can then distinguish between genders, species or other information (object versus other in this example) about the text. This can be an iterative process such as the one shown or be accomplished in a variety of other manners as appreciated by those skilled in the art. In this example, if the text is determined to relate to a make a first color, such as blue, can be then used to distinguish it from other text. If it is determined that the text is in turn related not to a male but to a female, a different color such as pink may be selected. If the text is not associated with a human but rather an animal a third color such as purple may be selected. If the text relates to an object another color may then be selected such as green and if the text is not relating to any person, animal or object any relates to other information yet a different color such a red may be selected.

In one embodiment, the user may have selected factors by picking a plurality of parameters or characteristics. For example, the user might have picked all information relating to the subject of cancer to be provided in pink or that any information about heart disease be provided in red. Such designation of color or graphics may then be saved in a memory associated with the processor for future use. This information can be placed in a user specific profile or be kept associated with a device specific profile. A user specific profile is by the person's name while the device specific user profile may be associated with a device, such as a computer used in a hospital. If there is no user or device profile detected, the processor then uses default options. The default options may be associated with preconceived notions of a color or graphics associated in a particular region (i.e. use of blue for boy or pink for girl in North America), or be content specific such as using the picture of a cartoon cat next to information or text relating to any cat or more specifically to particular cat in a particular cartoon or show. The graphics may again be user selected or determined based on a content or be provided as default options such as those provided in a particular geography or associated with a particular culture. Default options can be kept in a separate profile and be specifically picked based on the user's geographic location or other identifying information. More than one profile can be stored and used accordingly.

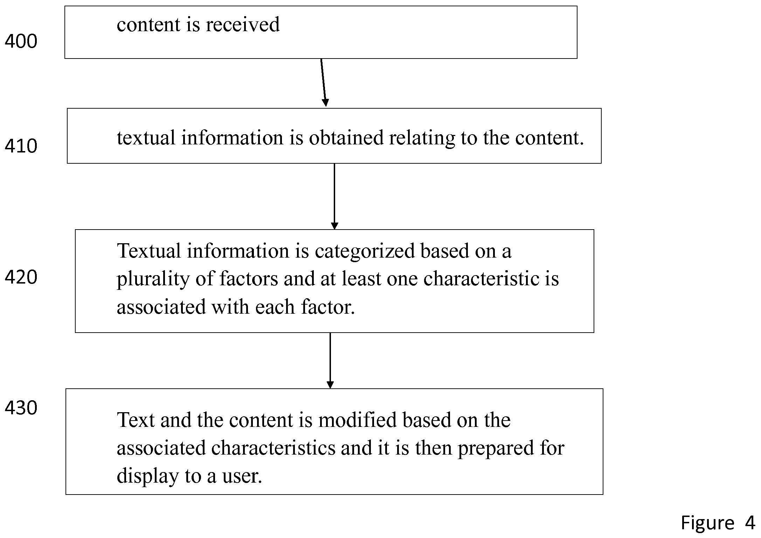

Figure 4 provides a flow chart illustration of one embodiment of the present invention. In step 400 a content is received and in step 410 textual information is obtained relating to the content. In step 420, the textual information is categorized based on a plurality of factors and at least one characteristic is associated to each factor. In step 430, the text and the content is modified based on the associated characteristics and it is then prepared for display to a user.

In one embodiment, step 410 can have the content received and parsed a content to identify different components of it. In this way, text to be incorporated with the content is identified as to be displayed to a user. In step 420, the text is then categorizing based on a plurality of factors and at least a different color, graphics or placement is associated with each category. In step 430, the text and content to be displayed is adjusted by incorporating at least one factor associated with the category.

While some embodiments have been described, it will be understood that those skilled in the art, both now and in the future, may make various improvements and enhancements which fall within the scope of the claims which follow.

## Claims

1. A method comprising:
receiving content to be displayed;
obtaining text relating to said content;
categorizing said text based on a plurality of factors and associating at least a characteristic for each factor;
modifying said text and content based on said associated characteristics for display.

2. An apparatus comprising:
one or more processors configured for
receiving content to be displayed and obtaining text relating to said content;
said processor(s) categorizing said text based on a plurality of factors and associating at least a characteristic for each factor and modifying said text and content based on said associated characteristics for display.

3. The apparatus of claim 2, further comprising a display for displaying said modified text and content.

4. The method of claim 1 or apparatus of claims 2-3 wherein said characteristic is selected from the group consisting of color, graphics, images, font size, placement or highlighting.

5. The method of claim 1 or 4 or apparatus of any of claims 2-4, wherein said content is a video segment having an associated audio.

6. The method of any of claims 1 or 3-5 or apparatus of any of claims 2-5, wherein said characteristics are preselected and stored in a profile.

7. The method of claim 6 or apparatus of claim 6, wherein said profile comprises a user profile.

8. The method of claim 6 or 7 or apparatus of claim 6 or 7, wherein said profile comprises a device profile.

9. The method of any of claims 6 to 8 or apparatus of any of claims 6 to 8 wherein said profile is based on a geography or a particular culture.

10. The method of any of claims 1 or 3-9 or apparatus of any of claims 2-9, wherein said category includes gender or species of an entity appearing in the content.

11. The method of any of claims 1 or 3-10 or apparatus of any of claims 2-10, wherein said category includes educational entertainment specific information relating to said content.

12. The method of any of claims 1 or 3-11 or apparatus of any of claims 2-11 wherein more than one characteristic is used for each factor.

13. The method of any of claims 6 to 9, further comprising determining if a profile is associated with said content and using said parameters in adjusting text and content to be displayed and displaying them to at least a user.

14. The method of any of claims 6 to 9 further comprising or the apparatus of any of claims 6 to 9 wherein said processor is configured for determineing if a profile is associated with said content and using said parameters in adjusting text and content to be displayed.

15. A non-transitory computer-readable medium storing computer-executable instructions executable to perform the method of any of claims 1 and 4-13.
